# EUROPEAN PATENT SPECIFICATION

(11) **EP 1 238 795 B1**
(45) Date of publication and mention of the grant of the patent: **26.01.2005**
(21) Application number: 01105254.5
(22) Date of filing: 05.03.2001
(51) Int. Cl.: B32B 27/08, B65D 81/26

(54) **Self-absorbing gas-barrier thermoformable sheet and receptacle for food packaging obtained therefrom**
Selbstabsorbierende, gassperrende thermoformbare Folie und daraus hergestellte Behälter zum Verpacken von Lebensmitteln
Feuille thermoformable, auto-absorbante, formant barrière aux gaz et récipient pour emballage alimentaire obtenu à partir de cette feuille

(43) Date of publication of application: 11.09.2002
(73) Proprietor: Cryovac, Inc., Duncan, S.C. 29334 (US)
(72) Inventor: Longo, Eugenio, 20017 Rho (Milano) (IT)
(74) Representative: De Carli, Elda

(56) References cited:
- EP-A- 0 520 509
- WO-A-99/32286
- US-A- 4 828 891

## Description

The present invention relates to a multi-layer, gas-barrier, thermoformable sheet suitable for the production of receptacles for the packaging of food products that tend to exude fluids.

The present invention is also directed to the receptacles, either in the form of trays or flat supports, obtained therefrom and to the use of said receptacles in food packaging processes.

### BACKGROUND OF THE INVENTION

It is conventional practice to display meat, poultry, and other food products in individual packages which comprise a supporting tray with an absorbent pad placed between the upper surface of the tray and the food product, to absorb any juices or liquids exuded from the food product. To prevent or retard any migration of the liquids from the absorbent pad back to the food product, the absorbent pads are typically enveloped in a moisture impermeable film that has a number of perforations on the surface facing the tray.

The use of an absorbing pad suffers from the big disadvantage of the labor cost involved in inserting it into a tray, including the costs of a padding machine specifically designed for this purpose. Another disadvantage of this system can be experienced when the pad is saturated with the liquids as it then tends to stick to the food product and must be physically separated therefrom by the consumer after the package is opened.

One approach to solve the above problems has been to provide a packaging tray having integral means for removing the fluids exuded from the food products, without requiring the use of a separate pad.

Several patents and patent applications have thus been published describing receptacles for packaging food products exuding fluids made with a laminate wherein an absorbing layer is positioned on top of a support layer or between a support layer and a food-contact perforated layer. Examples of these receptacles are described in GB-A-2,322,100, WO-A-99/32286, EP-A-878,481, EP-A-965,426, EP-A-642,907, and WO-A-98/12126.

None of these documents however makes reference to the possibility of obtaining a self-absorbing tray (i.e. a tray with integral means capable of absorbing the fluids) having gas-barrier properties.

On the other hand gas-barrier properties for a packaging material have become extremely important. Using gas-barrier packaging material it is in fact possible to package the food product under a modified atmosphere specifically designed to increase the shelf-life of the packaged product. It is thus possible for instance to prepare suitable food packages, e.g. meat packages, at a central unit and then distributing them to the supermarkets and small shops.

EP-A-520,509 relates to a thermoformed self-absorbing packaging element with gas-barrier properties. What is described in EP-A-520,509 is a container comprising an absorbing layer positioned between an outer sheet having gas barrier properties and an inner, food-contact porous drainage layer.

It has now been discovered that by following the teaching of EP-A-520,509 it is not always possible to obtain the claimed gas-barrier properties and that, in most of the cases and independently on the gas-barrier properties of the outer sheet and of the gas-barrier film that closes the mouth of the tray, the atmosphere within a package obtained by following the teaching of EP-A-520,509 does equilibrate with the outer atmosphere in a very short time. In fact it has been discovered that when a foamed or a fibrous layer is employed in the construction of the tray, air can permeate through the lateral edges of said foamed or fibrous gas-permeable layer and easily move within said layer through the walls of the container, passing, through the porous drainage layer, into the package, in contact with the food.

More particularly when a foam layer, such as a polystyrene foam layer, is employed as the structural layer, even if an outer layer and a lid with a very low oxygen transmisssion rate are employed, the atmosphere within the package re-equilibrates with the outer atmosphere in just few hours. In such a case it is almost immaterial whether the heat-sealing of the lid to the tray rim is carried out by using conventional pressure conditions or a much higher pressure, as in any case the foamed cells with not be compressed to such an extent to exclude air permeation at the sealing area.

Thus it is an object of the present invention to provide a receptacle for food packaging which is capable of absorbing fluids exuded from the food product placed on it or within it, without requiring the use of a separate pad and that at the same time may guarantee that the end package obtained by sealing to the receptacle inner surface a gas-barrier film, will have gas-barrier properties.

### SUMMARY OF THE PRESENT INVENTION

In a first aspect the present invention is directed to a thermoformable laminate which comprises a structural support layer of a foamed polymer, a core gas-barrier layer, a core liquid absorbing layer comprising a water-swellable, water insoluble absorbent material chosen from the group of super absorbent polymeric particulate materials embedded in a thermoplastic matrix of bonded with a polymeric binder, and a surface, heat-sealable layer, wherein the gas-barrier layer is positioned between the structural support layer and the core absorbing layer, and the core absorbing layer is positioned between the core gas-barrier layer and the surface heat-sealable layer.

In a second aspect the present invention is related to a receptacle for food obtained by forming the above laminate into any suitable shape, wherein the surface heat-sealable layer is the food-contact layer of the receptacle.

In a third aspect the present invention is directed to a gas-barrier package for food products that tend to exude fluids wherein a food product is loaded onto or into a receptacle according to the present invention and the package is closed by a gas-barrier lid, disposed over the food product, and sealed to the receptacle inner surface.

### BRIEF DESCRIPTION OF THE FIGURES

Figure 1 is a cross-sectional view of one embodiment of a laminate of the present invention;
Figure 2 is a cross-sectional view of second embodiment of a laminate of the present invention;
Figure 3 is a cross-sectional view of a flat support for food packaging constructed from the laminate of the present invention;
Figure 4 is a cross-sectional view of a food tray constructed from the laminate of the present invention;
Figure 5 is a cross-sectional view of one embodiment of a package of the present invention; and
Figure 6 is a cross-sectional view of a second embodiment of a package of the present invention.

### DETAILED DESCRIPTION OF THE INVENTION

A first object of the present invention is a thermoformable laminate which comprises a structural support layer 1 of a foamed polymer, a core gas-barrier layer 2, a core liquid absorbing layer 3 comprising a water-swellable, water insoluble absorbent material chosen from the group of super absorbent polymeric particulate materials embedded in a thermoplastic matrix or bonded with a polymeric binder, and a surface, heat-sealable layer 4, wherein the gas-barrier layer is positioned between the structural support layer and the core absorbing layer, and the core absorbing layer is positioned between the core gas-barrier layer and the surface heat-sealable layer.

As used herein the word "core layer" refers to any internal layer which preferably has a function other than serving as an adhesive or compatibilizer for adhering two layers to one another; the term "between", as applied to a sheet layer, expressed as being between two other specific layers, includes both direct adhesion of the subject layer to the two other layers it is between, without a tie layer, adhesive, or other layer there-between, and lack of direct adhesion to either or both of the two other layers the subject layer is between, i.e., one or more additional layers can be imposed between the subject layer and one or more of the layers the subject layer is between.

The structural support layer 1 serves to form and maintain the desired shape of the formed receptacle and provide structural integrity and support for the food product.

It can be made of a single layer or be a multi-layer foamed structure. It can be manufactured from any suitable thermoplastic material, such as for instance polystyrene, polypropylene, polyester, e.g. polyethylene terephtalate, polyethylene, PVC, and the like polymers. In case of a multi-layer structure, part of it can be foamed and part can be cast.

In a preferred embodiment the structural support layer 1 is a mono-layer made of a foamed polymer. In a most preferred aspect of said embodiment the structural support layer is of foamed polystyrene.

The thickness of the structural support layer 1 is typically comprised between about 100 and 7,000 µm, preferably between 2,000 and 7,000 µm.

Thicker layers however can be employed if needed to get the required stiffness provided that the end laminate can still be formed into a receptacle of the desired shape.

The core gas-barrier layer 2 comprises any of the polymers known in the art for their gas-barrier properties.

Non limitative examples of gas-barrier polymers are EVOH, PVDC, and polyamides.

As used herein, the term EVOH includes saponified or hydrolyzed ethylene-vinyl acetate copolymers, and refers to vinyl alcohol copolymers having an ethylene comonomer content preferably comprised from about 28 to about 48 mole %, more preferably, from about 32 to about 44 mole % ethylene, and even more preferably, from about 36 to about 42 mole % ethylene, and a saponification degree of at least 85 %, preferably at least 90 %.

The term PVDC refers to a vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) or to a blend thereof in different proportions. Generally said PVDC contains plasticisers and/or stabilisers as known in the art.

The term polyamide is intended to refer to both polyamides and co-or ter-polyamides. This term specifically includes aliphatic polyamides or co-polyamides, aromatic polyamides or co-polyamides, and partially aromatic polyamides or co-polyamides, modifications thereof and blends thereof.

As gas-barrier material for layer 2 also blends of EVOH with polyamides can suitably be employed.

The gas-barrier material for layer 2 may also consist of a silica coated film or anyway of a film of thermoplastic material with deposited a thin layer of inorganic metal oxides (typically silica or alumina) known to provide barrier properties in critical packaging applications.

Preferably however the barrier layer will comprise a thermoplastic polymer selected from the group consisting of PVDC, EVOH, and polyamides. Even more preferably the barrier layer will comprise PVDC or EVOH.

The thickness of the barrier layer will be set in order to provide the overall laminate with an Oxygen Transmission Rate (OTR) (evaluated by following the method described in ASTM D-3985 and using an OX-TRAN instrument by Mocon) lower than 10, preferably lower than 5 cm³/m².d.atm, when measured at 23 °C and 0 % of relative humidity.

Typically when PVDC or EVOH are employed as the gas-barrier materials, this is achieved with barrier layers 3-4 µm thick. Thicker layers can be used if desired or if a lower OTR is needed, while thinner layers can be used e.g. if a polymer with higher barrier properties is employed.

The absorbing layer will comprise super absorbent polymer (SAP) particles, wherein the term "SAP" refers to any water-swellable homo- or co-polymer known in the art, provided the form of particulate materials typically in the form of finely divided powders, embedded in a polymeric matrix or bonded with a polymeric binder. Typically these water-swellable polymers possess a structure in which a water-soluble polymer has been made insoluble by some process, typically by means of well known multi-functional cross-linking agents employed during or after polymerization, or by radiation cross-linking or by thermal treatments.

Examples of water-swellable polymers that may suitably be employed in the absorbent layer of the present laminate include : poly(acrylic acid) salts, poly(acrylate) salts, poly(vinyl alcohol-acrylic acid) salts, poly(isobutylene-maleic acid) salts, poly(ether)-based non ionic polymers, sodium carboxymethylcellulose, poly(vinylpyrrolidone), acrylonitrile-grafted starch, acrylic acid grafted-starch, and the like polymers.

According to a preferred embodiment of the present invention the absorbent layer will however contain a carboxylic polyelectrolyte, or a carboxylate polyelectrolyte.

In a most preferred embodiment the absorbent layer will contain the ammonium or alkali metal salts of homopolymers of acrylic or methacrylic acids or copolymers thereof with ethylenically unsaturated comonomers, or a partially saponified polyacrylate or polymethacrylate polymer.

The manufacture of hydrogel-forming material by crosslinking carboxylic polyelectrolytes or carboxylated polyelectrolytes was first described in US-A-3,669,103, US-A-3,670,731, US-A-3,980,663 and US-A-4,076,673 where the use of the obtained polymers to enhance the absorbency of disposable absorbent articles was also described.

A detailed description of the poly(acrylic acid) and poly(acrylate) SAPs that can be employed in the preparation of the absorbent layer in the laminate of the present invention is contained e.g. in WO 99/63923.

Super absorbent polymers suitable for food packaging pertaining to the class of poly(acrylic acids) and poly(acrylates) are commercially available from e.g. Dow and Chemdal.

In another preferred embodiment the absorbent layer will contain super absorbent polymers of the class of poly(vinylpyrrolidones), such as those commercially available from BASF (Kollidon®).

The sap particulate is embedded in a polymeric matrix or bonded with a polymeric binder to allow either the extrusion thereof in a film layer, or its distribution on a thermoplastic substrate by a continuous or discontinuous coating process or by spraying.

In one preferred embodiment the SAP particles are admixed with a thermoplastic, physiologically compatible, polymer, preferably a hydrophilic polymer such as for instance polyvinyl alcohol, polyacrylic acid, and the like polymers and the admixture is then extruded into a film layer or it is extrusion-coated on the surface of either one of the layers that in the end structure are directly adhered to the absorbent layer.

In another preferred embodiment the SAP particles are bonded in a natural or synthetic latex, such as a poly(alkylacrylate), poly(vinyl acetate), poly(styrene-butadiene) latex, optionally in the presence of a cross-linking agent and the mixture is then applied directly to one of the layers that in the end structure are directly adhered to the absorbent layer.

For the scope of the present invention, preferred latexes are those containing at least 2 %, more preferably at least 5 % of a natural or synthetic elastomer capable of forming a latex dispersion such as natural rubber, polybutadiene rubber, styrene-butadiene rubber, EPR, ethylene-vinyl acetate copolymers with a high VA content, acrylic rubber, and polyurethanes.

The application of the latex-bound SAP can be continuous or discontinuous. In particular the latex-bound SAP can be distributed by spraying or by any printing system using a suitable printing pattern, such as for instance uniformly distributed spots.

The ratio between the SAP particles and the binder is typically comprised between about 10 : 1 and 1 : 10 by weight, preferably is between about 8 : 1 and 1 : 8 and more preferably between about 5 : 1 and 1 : 5.

The overall amount of SAP that will be contained in absorbent layer 3 will depend on the type of food product packaged and on the absorbency of the particular SAP employed. Typically for food packaging the maximum absorbency required is about 1,500 ml/m².

In some cases the binder might be slightly foamed before being admixed with the SAP particles. In this case the heat and pressure exerted by the heat-sealing bar in the region of the end package where the top lid is sealed to the support, has to be sufficient to squeeze and compact the foam cells of this layer, destroying any possibility of gas communication between the environment and the interior of the package. In particular this is possible if the binder is or is based on a low melting polymer, particularly if it is or is based on a polymer with a melting temperature lower than that of the surface heat-sealable layer 4.

The laminate of the invention also contains a surface heat-sealable layer 4.

Said layer can be of any heat-sealable thermoplastic material, generally selected among the polyolefins, such as polyethylene homo- or co-polymers, propylene copolymers, etc., depending on the sealing layer of the barrier lid that will close the package. As used herein ethylene and propylene co-polymers refer to the co- or ter-polymers containing a major amount of respectively ethylene or propylene and a minor amount of one or more other olefins and/or a non-olefinic comonomer copolymerizable therewith.

Typical examples of materials suitable for the heat-sealable layer 4 are ethylene homopolymers, homogeneous and heterogeneous ethylene-α-olefin copolymers, ethylene-vinyl acetate copolymers, ionomers, and the like as well as blends of these polymers in any proportions. Suitable blends for the heat-sealable layer may also include peelable blends to provide the receptacle with an easy to open feature.

The thickness of the surface heat-sealable layer 4 is typically comprised between about 3 µm and about 100 µm, preferably between about 5 µm and about 80 µm, more preferably between about 8 µm and about 50 µm.

This surface heat-sealable layer 4 is provided with perforations to allow the fluids to pass downward from the food contact surface into the absorbing layer 3. Preferably the perforations have a small diameter, typically lower than 1500 µm, preferably lower than 750 µm, and more preferably lower than 500 µm, and are regularly distributed on the surface of the laminate. The number of perforations per m² will depend on the average diameter of the perforations and may suitably be comprised between 500 and 40,000, preferably between 1,000 and 10,000. The perforations are typically arranged in parallel rows that may be off set one respect to the other. The perforations are normally funnel-shaped towards the inside of the sheet and may have a round or slightly oval section, particularly in the regions where the sheet is stretched to form it into a shaped container.

By suitably combining the dimension of the holes in the surface heat-sealable layer 4, with the thickness of this layer - depending on the weight and firmness of the food product - it is possible to prevent any direct contact between the food product and the absorbing layer even in correspondence of the holes, and by suitably selecting the number of holes as well as the more-or-less hydrophobic nature of the resin employed for this layer, it is possible to achieve the absorbency of all the fluids that are spontaneously generated by the packaged food product. It should thus be possible to obtain an appealing package with no visible liquids and at the same time avoid any active drawing out of the fluid from the food product that might occur if the food product is directly in contact with the absorbent.

Alternatively the surface sealing layer 4 is not perforated but said sealing layer is of a porous, liquid pervious, film. Examples of porous films that may be pervious to liquids are some non-woven films or some void-containing films where the pattern of voids in the polymer matrix allows the passage of liquids by capillarity. The same classes of polymers and polymer blends indicated above can be employed for the non perforated, porous, liquid-pervious, sealing layer 4.

In a preferred embodiment the surface heat-sealable layer 4 is opaque, to hide the fluids absorbed in the subsisting layer. In a most preferred embodiment the surface heat-sealable layer 4 will have the same color as the substrate support layer 1.

It might also be desirable in certain instances to have in the structure an additional layer, a distribution layer 7, positioned between the fluid absorbing layer 3 and the surface heat-sealable layer 4. Such a layer might be useful to increase the efficiency of the absorbent layer by better distributing the fluids therein. Said optional distribution layer may have an absorbing capacity, but this is not a necessary feature. It may distribute the fluids that drip from the surface layer by a chemical or a physical mechanism. In the former case said layer will comprise a polar hydrophilic polymer such as a poly(acrylic acid), a poly(acrylayte), or another similar polymer, that preferably contains also surface active agents. In the latter case the distribution of the fluids will be obtained using a fibrous or slightly foamed open cell layer of a low melting polymer or a layer where the fibrous material is embedded into a polymer matrix that may optionally be slightly foamed. While the fluids will be physically distributed in the empty space between the fiber segments or in the cell volumes, heat-sealing of the lid to the self-absorbing support in the end package will melt the low melting polymer and press the molten phase into a solid layer thus interrupting any possibility of gas communication therethrough.

Additional layers may be present and are preferably present depending in particular on the specific resins used for the gas-barrier layer : tie or adhesive layers may be employed to bind the gas-barrier layer 2 to the substrate 1 or to the fluid absorbing layer 3, and bulk layers may be used in particular to separate a gas-barrier layer particularly susceptible to humidity from the fluid absorbing layer. To guarantee in fact the optimum gas-barrier properties under the conditions of use the overall laminate of the present invention should have an Oxygen Transmission Rate (OTR) measured at 23 °C and 100 % of relative humidity that is lower than 250, preferably lower than 150 and even more preferably lower than 100 cm³/m².d.atm.

The thickness of the possible tie layers is that needed to provide for the desired bond, and it is generally comprised between few microns and 40 µm, and preferably between 3 and 30 µm. The thickness of a possible bulk layer may of course be higher, depending on the specific need.

Suitable adhesive layers will comprise thermoplastic polymers such as ethylene-vinyl acetate copolymers with high vinyl acetate content (e.g. 18- 28 wt. % or even more), ethylene-(meth)acrylic acid copolymers, ethylene homopolymers or co-polymers modified with anhydride or carboxylic acid functionalities, styrene-butadiene copolymers optionally modified with anhydride or carboxylic functionalities, and the like known resins.

Optional bulk layers will typically include ethylene- or propylene- homo- or co-polymers.

When according to a most preferred embodiment of the invention the gas-barrier layer comprises EVOH, it is necessary to separate said layer from the fluid absorbing one as the gas-barrier properties of EVOH are highly impaired by humidity. At least one intermediate layer 6 therefore will necessarily be present and will be thick enough to preserve the EVOH layer from any contact with the fluid.

The overall thickness of the laminate of the present invention will typically be up to 0.8 cm and preferably up to 0.6 cm, as known and conventional in this area.

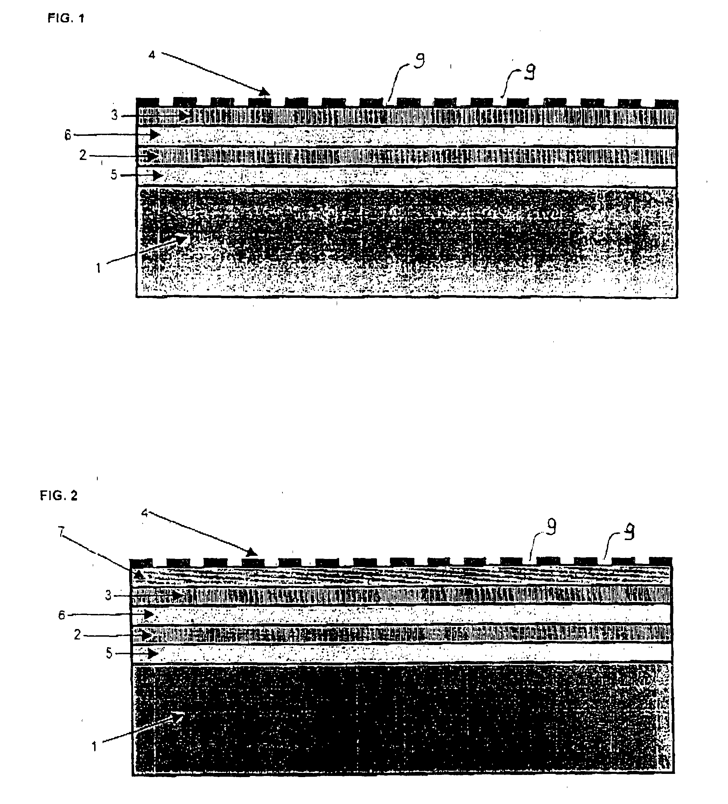

Figures 1 and 2 illustrate two preferred embodiments of the present invention where the barrier layer 2 is bound to the substrate support 1 via an adhesive layer 5 and to the absorbing layer 3 via an intermediate layer 6. In these Figures, the perforations in the heat-sealable layer 4 are indicated with 9, and 7 identifies the distribution layer that is present only in the embodiment of Figure 2.

Construction of the finished laminate according to the present invention may be accomplished in several ways. The various layers, i.e. the structural support layer 1, the gas-barrier layer 2, the liquid absorbing layer 3 and the surface heat-sealable layer 4 may be formed separately using standard equipment and techniques and then laminated together by e.g. heat-lamination, glue-lamination, or extrusion lamination. When according to a preferred embodiment of the present invention the absorbing layer 3 is obtained by means of a SAP containing latex dispersion, said dispersion can be distributed on a surface of either one of the adjacent layers and the obtained two-layer partial structure is then laminated to the rest of the structure by the same general methods.

Alternatively part of the overall structure may be obtained by co-extrusion and then laminated to the remaining parts.

When a thermoplastic film coated with a thin layer of metal oxides, such as a silica coated polyethylene layer, is employed as the gas-barrier layer, the adhesion of said layer to the adjacent ones may be obtained using a polyolefin modified with anhydride or carboxylic functionalities or with any water- or solvent-based glue approved for food packaging applications.

As an example, one suitable method of construction of a preferred laminate of the present invention would involve
■ extrusion foaming the structural support layer 1,
■ heat-laminating said layer 1 to a co-extruded film comprising an adhesive layer 5, the gas-barrier layer 2, and the intermediate layer 6,
■ coating the free surface of layer 6 in the obtained laminate with a SAP containing suitable latex to create absorbing layer 3 and finally
■ heat- or glue-laminating a pre-perforated heat-sealable layer 4 on top of the absorbing layer 3.

The above method may include, as the last but one step, the optional step of laminating a distribution layer 7 to either the absorbing layers 3 or the heat-sealable layer 4 or of coating it onto one of said layers. When said optional distribution layer 7 is made of a thermoplastic polymer it can also be co-extruded together with the heat-sealable layer 4.

Still alternatively, the heat-sealable layer 4 can be applied as a solid instead of a pre-perforated film and any perforation, if needed, can then be carried out on the end laminate, paying particular attention however not to perforate the gas-barrier layer 2.

After the laminate has been constructed, a receptacle may be shaped by any known technique.

A second object of the present invention is a self-absorbing receptacle for packaging food formed of the multi-layer laminate of the invention, wherein the sealing layer 4 is the food contact layer of the receptacle.

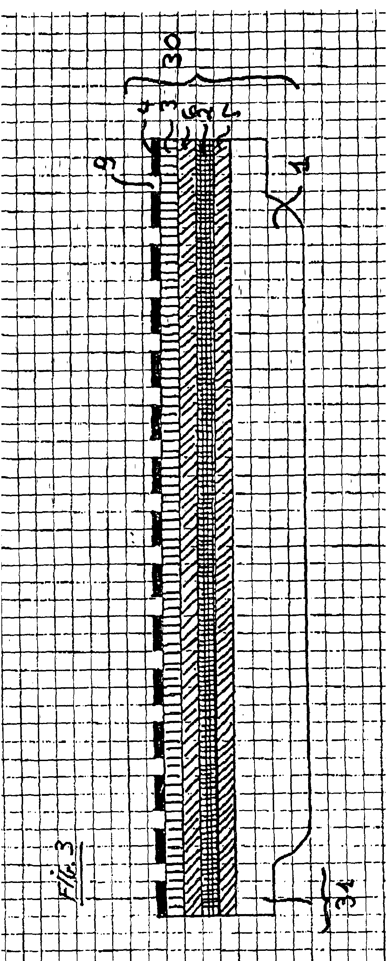

As an example the self-absorbing receptacle may be in the form of a flat support, illustrated in Fig. 3 as 30, that may have e.g. a rectangular, round, oval or squared surface. When the structural support layer 1 is of a foam polymer, the edges 31 of said flat support may conveniently be pressed and their thickness significantly reduced to give a profile as illustrated in the figure. This will help keeping the flat support in place on the conveyor during the packaging process and more particularly while the product to be packaged is loaded thereupon. The width of these thinner edges is typically from about 1/30 to about 1/15 of the relative dimension of the support itself.

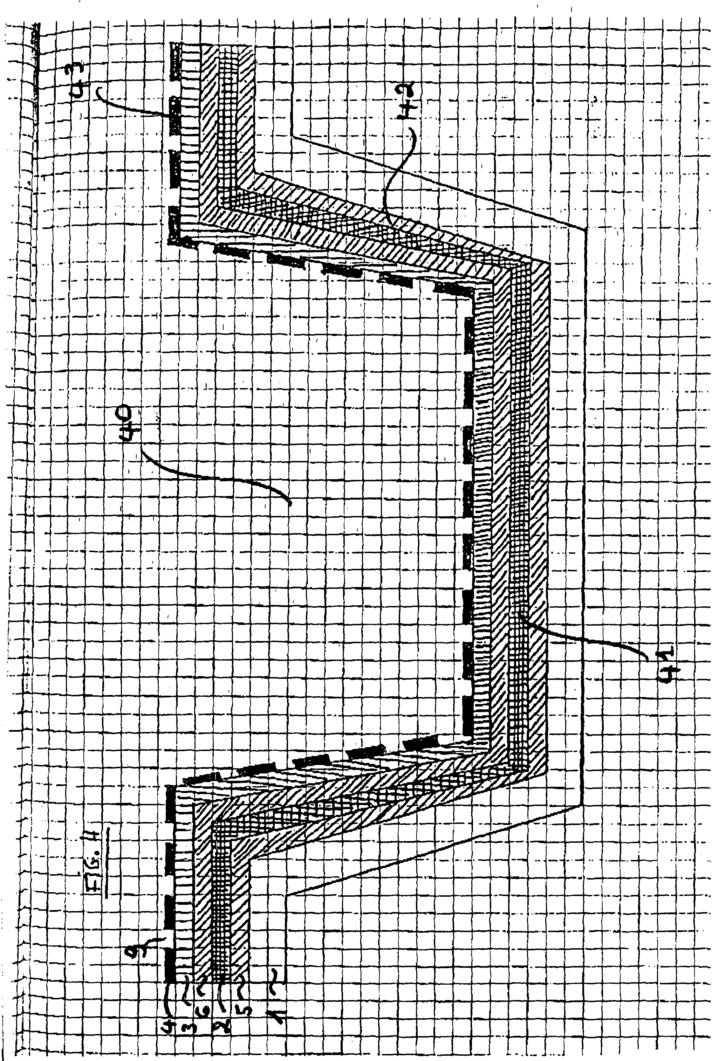

Alternatively the laminate may be shaped into a tray 40 as illustrated in Figure 4 by thermoforming, vacuum forming, stamping or any other technique available. Said tray 40 has a bottom 41 (that may be flat or concave or convex or of any other shape), side walls 42 and typically an outwardly directed flange 43, which extends around the rim or periphery of the tray.

A further specific object of the invention is the use of a receptacle according to the present invention in the packaging of a food product in a modified atmosphere wherein the food product is loaded onto a self-absorbing gas-barrier receptacle according to the present invention, the modified atmosphere is introduced into the package by gas flushing, with or without prior vacuumization, followed by the sealing of a gas-barrier film or lid to the scaling surface of the receptacle to provide for a hermetically closed modified atmosphere package.

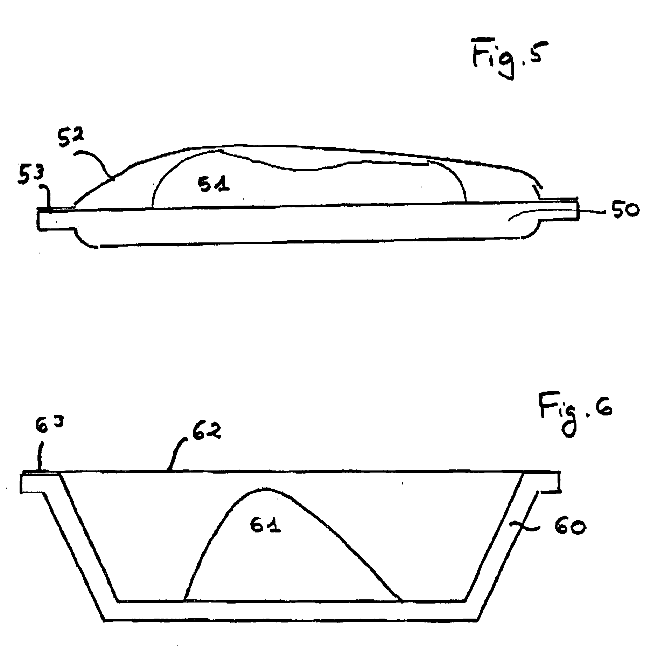

Examples of packages are illustrated in Figures 5 and 6 where Figure 5 refers to a package where the product 51 is placed on a flat support 50 and the package is then closed by sealing a flexible gas-barrier film 52, preferably a heat-shrinkable film, to the sealing surface of the receptacle 50 along a closed line 53, typically parallel to the flat support outer edge.

In Figure 6 a tray 60 is shown where a product 61 is loaded and the package is closed by a more-or-less rigid, heat-shrinkable or non heat-shrinkable, gas-barrier lid 62 sealed to the tray rim 63. If, when a tray is used as the receptacle, the loaded product is higher than the tray walls a flexible gas-barrier film, either heat-shrinkable or stretchable, has to be employed and sealed to the tray rim (not shown in the figures).

## Claims

1. A thermoformable laminate which comprises:
- a structural support layer 1 of a foamed polymer,
- a core gas-barrier layer 2,
- a core liquid absorbing layer 3 comprising a water-swellable, water-insoluble absorbent material, chosen from the group of super absorbent polymeric particulate materials embedded in a thermoplastic matrix or bonded with a polymeric binder,
- and a surface, heat-sealable layer 4,
wherein the gas-barrier layer 2 is positioned between the structural support layer 1 of foamed polymer and the core absorbing layer 3, and the core absorbing layer 3 is positioned between the core gas-barrier layer 2 and the surface heat-sealable layer 4.

2. The laminate of claim 1 wherein the structural support layer 1 is of foamed polystyrene.

3. The laminate of claim 1 wherein the core gas-barrier layer 2 comprises PVDC, EVOH and/or polyamide.

4. The laminate of claim 1 where said absorbing material comprises at least one of the following polymers: poly(acrylic acid) salts, poly(acrylate) salts, poly(vinyl alcohol-acrylic acid) salts, poly(iso-butylene-maleic acid) salts, poly(ether)-based non ionic polymers, sodium carboxymethylcellulose, poly(vinylpyrrolidone), acrylonitrile-grafted starch, and acrylic acid-grafted starch.

5. The laminate of claim 1 wherein the heat-sealing layer 4 comprises one or more polymers selected from ethylene and propylene homo-polymers and co-polymers.

6. The laminate of claim 1 wherein the heat-sealable layer 4 is perforated.

7. A self-absorbing receptacle for packaging food formed of the multi-layer laminate of any of claims 1 to 6, wherein the heat-sealing layer 4 is the food contact layer of the receptacle.

8. A process for packaging a food product in a modified atmosphere wherein the food product is placed in a receptacle, the modified atmosphere is introduced into the package by gas flushing, with or without prior vacuumization, and a gas barrier film or lid is sealed onto the sealing surface of the receptacle, **characterized in that** the receptacle is a self-absorbing, gas-barrier receptacle of claim 7.

## Patentansprüche

1. Thermoformbares Laminat, das umfasst:
- eine Strukturträgerschicht 1 aus geschäumtem Polymer,
- eine Gasbarrierekernschicht 2,
- eine flüssigkeitabsorbierende Kernschicht 3, die ein wasserquellbares, wasserunlösliches Absorptionsmaterial ausgewählt aus der Gruppe von superabsorbierenden teilchenförmigen polymeren Materialien eingebettet in eine thermoplastische Matrix oder gebunden mit einem polymeren Bindemittel umfasst,
- und eine heißsiegelbare Oberflächenschicht 4,
wobei die Gasbarriereschicht 2 sich zwischen der Strukturträgerschicht 1 aus geschäumtem Polymer und der absorbierenden Kernschicht 3 befindet und die absorbierende Kernschicht 3 sich zwischen der Gasbarrierekernschicht 2 und der heißsiegelbaren Oberflächenschicht 4 befindet.

2. Laminat nach Anspruch 1, bei dem die Strukturträgerschicht 1 aus geschäumtem Polystyrol ist.

3. Laminat nach Anspruch 1, bei dem die Gasbarrierekernschicht 2 PVDC, EVOH und/oder Polyamid umfasst.

4. Laminat nach Anspruch 1, bei dem das absorbierende Material mindestens eines der folgenden Polymere umfasst: Poly(acrylsäure)salze, Poly(acrylat)salze, Poly (vinylalkohol-acrylsäure)salze, Poly(isobutylen-maleinsäure)salze, Poly(ether)-basierende nichtionische Polymere, Natriumcarboxylmethylcellulose, Poly(vinylpyrrolidon), acrylnitrilgepfropfte Stärke und acrylsäuregepfropfte Stärke.

5. Laminat nach Anspruch 1, bei dem die Heißsiegelschicht 4 ein oder mehrere Polymere ausgewählt aus Ethylen- und Propylenhomopolymeren und -copolymeren umfasst.

6. Laminat nach Anspruch 1, bei dem die heißsiegelbare Schicht 4 perforiert ist.

7. Selbstabsorbierender Behälter zur Verpackung von Nahrungsmitteln gebildet aus dem Mehrschichtlaminat gemäß einem der Ansprüche 1 bis 6, wobei die Heißsiegelschicht 4 die Nahrungsmittelkontaktschicht des Behälters ist.

8. Verfahren zur Verpackung von Nahrungsmittelprodukten in einer modifizierten Atmosphäre, bei dem das Nahrungsmittelprodukt in den Behälter gegeben wird, die modifizierte Atmosphäre in die Verpackung durch Gasspülung mit oder ohne vorherige Vakuumerzeugung eingebracht wird und eine Gasbarrierefolie oder ein Gasbarrieredeckel auf die Siegeloberfläche des Behälters gesiegelt wird, **dadurch gekennzeichnet, dass** der Behälter ein selbstabsorbierender Gasbarrierebehälter gemäß Anspruch 7 ist.

## Revendications

1. Stratifié thermoformable qui comprend :
- une couche support de structure 1 d'un polymère moussé,
- une couche centrale formant barrière aux gaz 2,
- une couche centrale absorbant les liquides 3, comprenant une matière absorbante, insoluble dans l'eau, gonflable à l'eau, choisie dans le groupe des matières particulaires de polymères superabsorbants, intégrées dans une matrice thermoplastique ou liées avec un liant polymère,
- et une couche de surface thermoscellable 4,
dans lequel la couche formant barrière aux gaz 2 est positionnée entre la couche support de structure 1 du polymère moussé et la couche centrale absorbante 3 et la couche centrale absorbante 3 est positionnée entre la couche centrale formant barrière aux gaz 2 et la couche de surface thermoscellable 4.

2. Stratifié selon la revendication 1, dans lequel la couche support de structure 1 est en polystyrène moussé.

3. Stratifié selon la revendication 1, dans lequel la couche centrale formant barrière aux gaz 2 comprend du PVDC, EVOH et/ou du polyamide.

4. Stratifié selon la revendication 1, dans lequel la matière absorbante comprend au moins l'un des polymères suivants : sels de poly(acides acryliques), sels de poly(acrylate), sels de poly(vinyl alcool - acide acrylique), sels de poly(isobutylène - acide maléique), polymères non ioniques à base de poly(éther), carboxyméthylcellulose sodique, poly(vinylpyrrolidone), amidon greffé d'acrylonitrile et amidon greffé d'acide acrylique.

5. Stratifié selon la revendication 1, dans lequel la couche de thermoscellage 4 comprend un ou plusieurs polymères choisis parmi les homopolymères et copolymères d'éthylène et de propylène.

6. Stratifié selon la revendication 1, dans lequel la couche thermoscellable 4 est perforée.

7. Réceptacle auto-absorbant pour l'emballage alimentaire formé du stratifié multicouches de l'une quelconque des revendications 1 à 6, dans lequel la couche de thermoscellage 4 est la couche en contact avec l'aliment du réceptacle.

8. Procédé pour emballer un produit alimentaire dans une atmosphère modifiée, dans lequel le produit alimentaire est placé dans un réceptacle, l'atmosphère modifiée est introduite dans l'emballage par injection de gaz, avec ou sans la mise sous vide préalable, et un film formant barrière aux gaz ou un couvercle est scellé sur la surface de scellage du réceptacle, **caractérisé en ce que** le réceptacle est un réceptacle auto-absorbant, formant barrière aux gaz, de la revendication 7.
